# EUROPEAN PATENT APPLICATION

(11) **EP 4 793 173 A2**
(43) Date of publication of application: **19.08.2026**
(21) Application number: 26158882.6
(22) Date of filing: 16.02.2026
(51) Int. Cl.: B64D 27/33, F02C 7/36, F02K 5/00

(54) **AIRCRAFT HYBRID ELECTRIC PROPULSION SYSTEM**

(30) Priority: 14.02.2025 US 202519054189
(71) Applicant: Pratt & Whitney Canada Corp., (01BE5) Longueuil, QC J4G 1A1 (CA)
(72) Inventor: BRITO, Roberto, J4G 1A1 (01BE5) Longueuil (CA); CHATELOIS, Bruno, J4G 1A1 (01BE5) Longueuil (CA); WEAVER, Paul, J4G 1A1 (01BE5) Longueuil (CA); DUROCHER, Eric S., J4G 1A1 (01BE5) Longueuil (CA)
(74) Representative: Dehns

(57) **Abstract**

A hybrid-electric propulsion, HEP, system (20) for powering an aircraft is provided. The system (20) includes a gearbox (26), a gas turbine engine (22), and an electric motor (24). The gearbox (26) includes an input shaft (46), an output shaft (54), a drive gear (52), a first layshaft assembly (48), a second layshaft assembly (50), and a first gearbox accessory mount (56A). The gas turbine engine (22) is in drive communication with the input shaft (46) of the gearbox (26). The electric motor (24) is engaged with the first gearbox accessory mount (56A). The first layshaft, FL, assembly (48) includes a first layshaft (68), a first FL gear (64), and a second FL gear (66). The first and second FL gears (64, 66) are attached to the first layshaft (68). The first FL gear (64) is engaged with the input shaft (46) and the second FL gear (66) is engaged with the drive gear (52). The first gearbox accessory mount (56A) is in geared communication with the drive gear (52) independent of the first layshaft assembly (48).

## Description

### BACKGROUND OF THE INVENTION

### 1. Technical Field

The present invention relates to aircraft propulsion systems in general, and to aircraft hybrid-electric propulsion systems in particular.

### 2. Background Information

A hybrid electric propulsion ("HEP") system for an aircraft includes a thermal engine (e.g., a gas turbine engine) and at least one electric motor for providing motive force for an aircraft. The electric motor can be situated to provide rotational drive to the thermal engine or to a gearbox. What is needed is a system and method for providing rotational drive from an electric motor within a HEP system that is an improvement over existing systems and methods.

### SUMMARY

According to an aspect of the present invention, a hybrid-electric propulsion (HEP) system for powering an aircraft is provided. The system includes a gearbox, a gas turbine engine, and an electric motor. The gearbox includes an input shaft, an output shaft, a drive gear, a first layshaft assembly, a second layshaft assembly, and a first gearbox accessory mount. The gas turbine engine is in drive communication with the input shaft of the gearbox. The electric motor is engaged with the first gearbox accessory mount. The first layshaft (FL) assembly includes a first layshaft, a first FL gear, and a second FL gear. The first and second FL gears are attached to the first layshaft. The first FL gear is engaged with the input shaft and the second FL gear is engaged with the drive gear. The first gearbox accessory mount is in geared communication with the drive gear independent of the first layshaft assembly.

Optionally, and in accordance with the above, the HEP system may be configured to operate in a first mode of operation in which the gas turbine engine is controlled to provide rotational drive to the input shaft of the gearbox and the electric motor is controlled to not operate, or operate in a second mode of operation in which the gas turbine engine is controlled to provide a first rotational drive to the input shaft of the gearbox and the electric motor is controlled to provide a second rotational drive to the drive gear of the gearbox.

Optionally, and in accordance with any of the above, the HEP system may be configured to operate in a first mode of operation, or a second mode of operation, or a third mode of operation one at a time. In the first mode of operation, the gas turbine engine is controlled to provide rotational drive to the input shaft of the gearbox and the electric motor is controlled to not operate. In the second mode of operation, the gas turbine engine is controlled to provide a first rotational drive to the input shaft of the gearbox and the electric motor is controlled to provide a second rotational drive to the drive gear of the gearbox. In the third mode of operation, the gas turbine engine is controlled to provide rotational drive to the input shaft of the gearbox and the electric motor is controlled to produce electrical energy.

Optionally, and in accordance with any of the above, in the third mode of operation the electric motor may be driven by the gearbox.

Optionally, and in accordance with any of the above, the gearbox may be configured as a reduction gearbox.

Optionally, and in accordance with any of the above, the second layshaft (SL) assembly may include a second layshaft, a first SL gear, and a second SL gear. The first and second SL gears may be attached to the second layshaft, and the first SL gear may be engaged with the input shaft and the second SL gear may be engaged with the drive gear.

Optionally, and in accordance with any of the above, the first and second layshaft assemblies may be parallel.

Optionally, and in accordance with any of the above, the geared communication between the first gearbox accessory mount and the drive gear may be a reduction configuration.

Optionally, and in accordance with any of the above, the HEP system may include a propulsion unit in communication with the output shaft, and the propulsion unit may include a propeller.

According to an aspect of the present invention, a hybrid-electric propulsion (HEP) system for powering an aircraft is provided that includes a gearbox, a gas turbuine engine, an electric motor, and a controller. The gearbox includes an input shaft, an output shaft, a drive gear, a first layshaft assembly, and a first gearbox accessory mount. The gas turbine engine is in drive communication with the input shaft of the gearbox. The electric motor is engaged with the first gearbox accessory mount. The first layshaft (FL) assembly includes a first layshaft, a first FL gear, and a second FL gear. The first and second FL gears are attached to the first layshaft, and the first FL gear is engaged with the input shaft and the second FL gear is engaged with the drive gear. The first gearbox accessory mount is in geared communication with the drive gear independent of the first layshaft assembly. The HEP system is configured to operate in a first mode of operation, a second mode of operation, or a third mode of operation, one at a time. The first mode of operation includes controlling the gas turbine engine to provide rotational drive to the input shaft of the gearbox, and controlling the electric motor to not operate. The second mode of operation includes controlling the gas turbine engine to provide a first rotational drive to the input shaft of the gearbox and controlling the electric motor to provide a second rotational drive to the drive gear of the gearbox. The third mode of operation includes controlling the gas turbine engine to provide rotational drive to the input shaft of the gearbox and controlling the electric motor to produce electrical energy. The controller is in communication with the electric motor and a non-transitory memory storing instructions. The instructions when executed cause the system controller to selectively operate the HEP system in one of the first mode of operation, the second mode of operation, or the third mode of operation, and to subsequently operate the HEP system in another of the first mode of operation, the second mode of operation, or the third mode of operation.

Optionally, and in accordance with any of the above, the system may include a second layshaft (SL) assembly that includes a second layshaft, a first SL gear, and a second SL gear, wherein the first SL gear and the second SL gear are attached to the second layshaft, and the first SL gear is engaged with the input shaft and the second SL gear is engaged with the drive gear.

According to an aspect of the present invention, a gearbox for a hybrid-electric propulsion (HEP) system for an aircraft. The gearbox includes an input shaft, an output shaft, a drive gear, a first layshaft assembly, a second layshaft assembly, and a first gearbox accessory mount. The first layshaft (FL) assembly includes a first layshaft, a first FL gear, and a second FL gear. The first and second FL gears are attached to the first layshaft, and the first FL gear is engaged with the input shaft and the second FL gear is engaged with the drive gear. The second layshaft (SL) assembly includes a second layshaft, a first SL gear, and a second SL gear. The first and second SL gears are attached to the second layshaft, and the first SL gear is engaged with the input shaft and the second SL gear is engaged with the drive gear. The first gearbox accessory mount is in geared communication with the drive gear independent of the first layshaft assembly. The first gearbox accessory mount is configured to engage an electric motor of the HEP system for transferring rotational drive from the electric motor to the drive gear.

The foregoing features and elements may be combined in various combinations without exclusivity, unless expressly indicated otherwise. For example, aspects and/or embodiments of the present invention may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic view of a present invention hybrid-electric propulsion system embodiment.
FIG. 2 is a diagrammatic view of a present invention hybrid-electric propulsion system embodiment.
FIG. 3 is a diagrammatic perspective view of a present invention gearbox embodiment.
FIG. 3A is a diagrammatic view of the present invention gearbox embodiment shown in FIG. 3 with an electric motor and an electric generator diagrammatically shown mounted on gearbox accessory mounts.
FIG. 4 is a diagrammatic top view of a present invention hybrid-electric propulsion system embodiment.
FIG. 5 is a diagrammatic view of a present invention hybrid-electric propulsion system embodiment.
FIG. 5A is a diagrammatic perspective view of a present invention gearbox embodiment.

### DETAILED DESCRIPTION

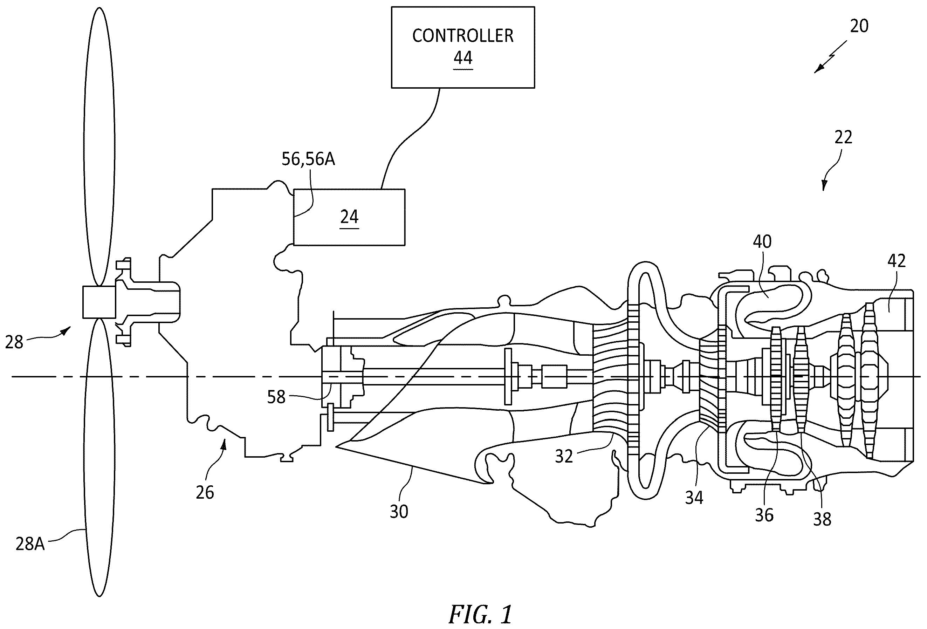

FIG. 1 is a diagrammatic view of an aircraft hybrid-electric propulsion (HEP) system 20 that includes a gas turbine engine 22, an electric motor ("E-motor 24"), a gearbox 26, and a propulsion unit 28.

The gas turbine engine 22 includes an inlet duct 30, a low pressure compressor 32, a high pressure compressor 34, a high pressure turbine 36, a low pressure turbine 38, and a combustor 40. The gas turbine engine 22 also includes a power turbine 42. The present invention is not limited to the gas turbine engine 22 shown in FIG. 1 and may be used with other gas turbine engine configurations. The gas turbine engine 22 is in communication with the gearbox 26 and the gearbox 26 is in communication with the propulsion unit 28. The propulsion unit 28 shown in FIG. 1 includes a propeller 28A. The present invention is not limited to use with a propulsion unit 28 that includes a propeller 28A.

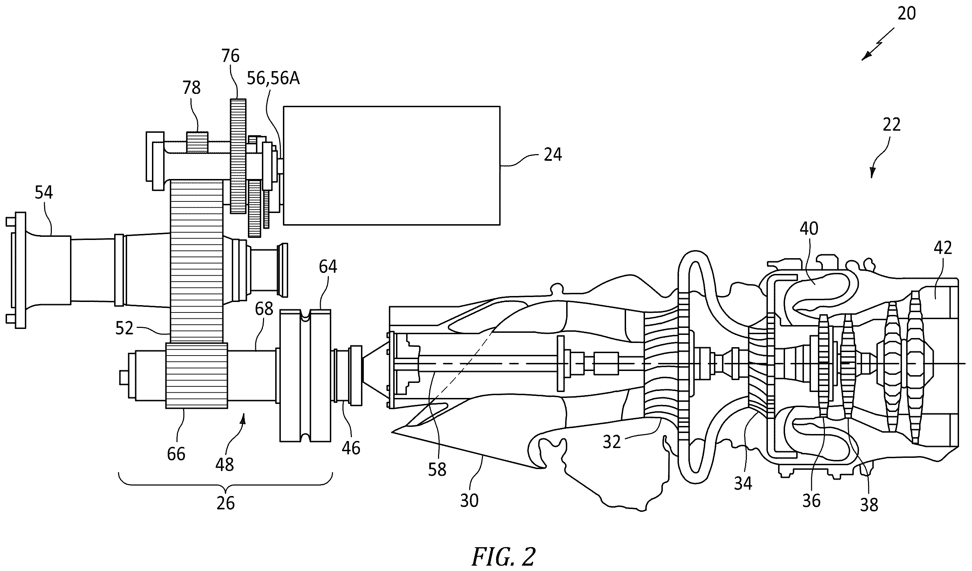

The terms "forward" and "aft" are used herein to indicate the relative position of a component or surface. As core gas air passes through the gas turbine engine 22 diagrammatically shown in FIGS. 1 and 2, the compressor sections 32, 34 are "forward" of the turbine sections 38, 40 and the power turbine 42 is "aft" of the turbine sections 38, 40. The terms "upstream" and "downstream" used herein refer to the direction of a gas flow passing through a gas path of the turbine engine 22. It should also be noted that the terms "radial" and "circumferential" are used herein with respect to the rotational axis of the turbine engine 22.

The E-motor 24 may be an alternating current (AC) motor that can be controlled to rotationally drive a component, or can be controlled to produce electrical energy; i.e., function as an electrical generator. In some embodiments, the present invention may include components associated with the operation of the E-motor 24, including one or more of an electrical energy storage device (e.g., a battery - not shown), a battery electrical management system (not shown),an E-motor controller (not shown).

FIG. 1 diagrammatically illustrates the present invention HEP system 20 including a controller 44. The term "controller" as used herein refers to a device that may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the present invention system (or a system component) to accomplish the same algorithmically and/or coordination of system components. The controller 44 may include or may be in communication with one or more memory devices. The present invention is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. The present invention is not limited to any particular controller architecture unless specifically stated herein. A non-limiting example of a HEP system 20 device that functions as a controller 44 or incorporates a controller 44 is a FADEC. Other devices (e.g., an E-motor controller, which may include an inverter, rectifying circuits, and the like) may also include a controller, and the various controllers may be in communication with one another to accomplish the functionality described herein. The present invention is not limited to any particular controller architecture.

The gearbox 26 may be configured as a reduction gearbox that accepts an input rotational drive at a first rotational speed (S1) and at a first torque (T1) and produces an output rotational drive at a second rotational speed (S2) and at a second torque (T2), wherein the first rotational speed is greater than the second rotational speed (S1 > S2) and the second torque is greater than the first torque (T2 > T1).

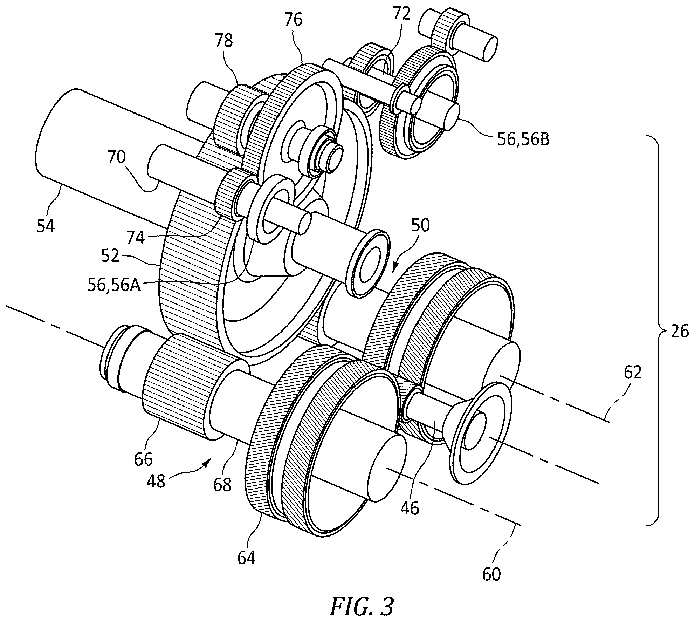

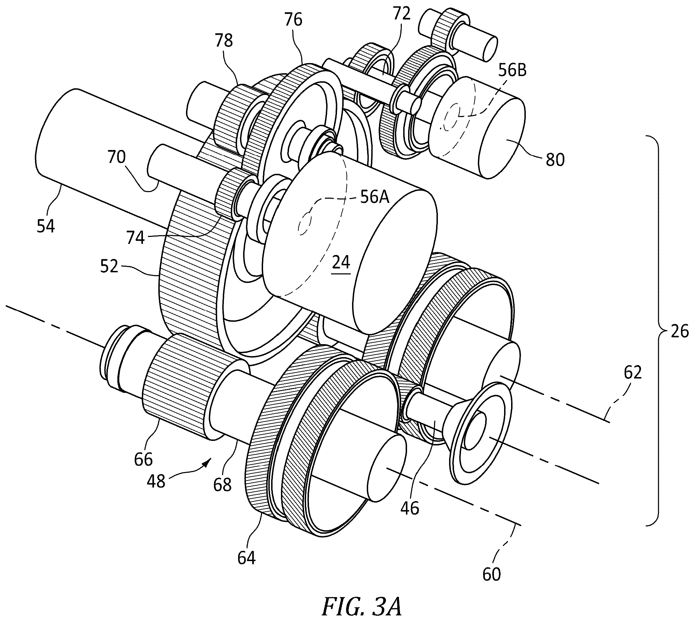

The present invention gearbox 26 embodiment diagrammatically shown in FIGS. 2 and 3 includes an input shaft 46, a first layshaft assembly 48, a second layshaft assembly 50 (see FIG. 3), a drive gear 52, an output shaft 54, and gearbox accessory mounts 56.

The gearbox input shaft 46 is directly or indirectly engaged with, and is driven by, the gas turbine engine 22. An example of a gearbox input shaft 46 that is directly engaged with the gas turbine engine 22 is one wherein the gearbox input shaft 46 is connected to an engine shaft and rotates at the same speed as the engine shaft. An example of a gearbox input shaft 46 that is indirectly engaged with the gas turbine engine 22 is one wherein the gearbox input shaft 46 and the engine shaft are both connected to a gear arrangement (not shown) and the engine shaft and gearbox input shaft 46 rotate at different rotational speeds. In the gas turbine engine 22 shown in FIG. 1, a shaft 58 extending from the power turbine 42 is an example of an engine shaft that may be directly or indirectly engaged with the gearbox input shaft 46.

Referring to FIG. 3, the first layshaft assembly 48 is disposed along a first layshaft rotational axis 60 and the second layshaft assembly 50 is disposed along a second layshaft rotational axis 62. The first and second layshaft rotational axes 60, 62 are parallel one another.

In some embodiments, the first and second layshaft assemblies 48, 50 may have the same configuration but that is not required. To facilitate the description herein, the first and second layshaft assemblies 48, 50 will be described as having the same configuration unless otherwise indicated. Each layshaft assembly 48, 50 includes a first gear 64 and a second gear 66 mounted on a layshaft 68. The first gears 64 are engaged with the gearbox input shaft 46; e.g., see FIG. 3. The second gears 66 are engaged with the drive gear 52. The drive gear 52 is engaged with the output shaft 54. The relative diameters of the gearbox input shaft 46, the first gear 64, the second gear 66, and the drive gear 52 may be chosen to create a multi-stage gear reduction. Hence, rotational drive from the gas turbine engine 22 is supplied to the input shaft 46, and the input shaft 46 transfers the rotational drive to the first gears 64. The rotational drive is subsequently transferred to the drive gear 52 via the second gears 66, and the drive gear 52 transfers the rotational drive to the output shaft 54.

Within the present invention, the gearbox accessory mounts 56 are configured to engage an accessory device (e.g., an electric motor, an electric generator, or the like) with the drive gear 52. In some embodiments, the engagement between the accessory device and the drive gear 52 is created through gearing that step-wise transitions rotational drive between the two devices. For example, FIG. 3 diagrammatically illustrates a first shaft 70 associated with a first accessory mount 56A and a second shaft 72 associated with a second accessory mount 56B. An accessory device coupled to the first accessory mount 56A will be in drive communication with the first shaft 70. The first shaft 70 has a gear section 74 that is engaged with a first intermediary gear 76. A second intermediary gear 78 is in communication with the first intermediary gear 76 by shaft connection, and the second intermediary gear 78 is engaged with the drive gear 52. The first and second intermediary gears 76, 78 may be referred to as "power gears". The shaft gear section 74, the first intermediary gear 76, and the second intermediary gear 78 are configured to produce differences between input and output rotational speed and torque; e.g., a reduction configuration as described herein wherein (S1 > S2) and (T2 > T1). The second shaft 72 may be configured in a similar manner to produce differences between input and output rotational speed and torque. The present invention is not limited to the accessory mount shaft and gear arrangement shown in FIG. 3.

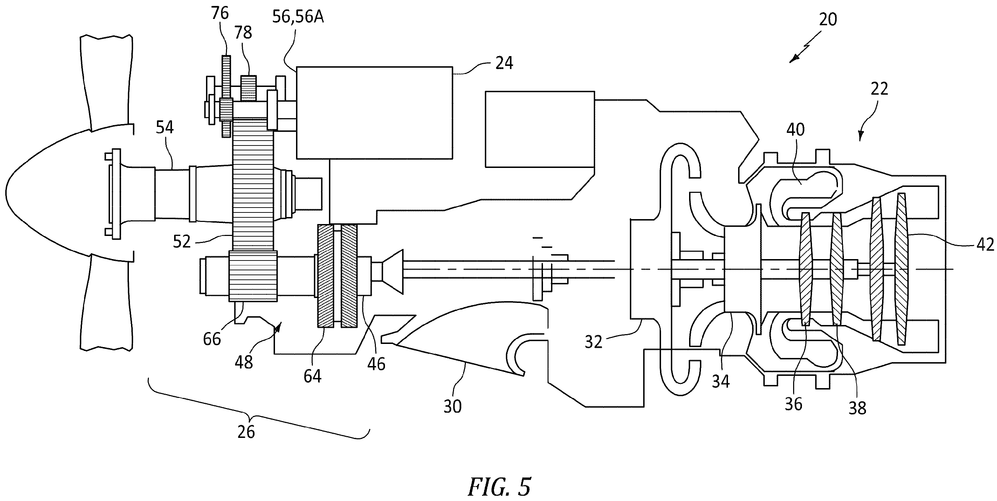

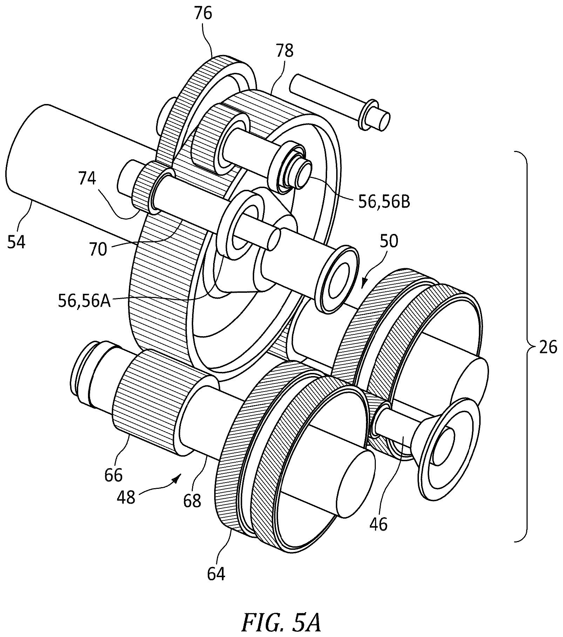

The gearbox 26 embodiment diagrammatically shown in FIGS. 2 and 3 illustrate the first shaft gear section 74 and the first intermediary gear 76 disposed aft of the drive gear 52. FIGS. 5 and 5A diagrammatically illustrate a gearbox 26 embodiment wherein accessory device gearing is disposed forward of the drive gear 52. A gearbox 26 embodiment wherein accessory device gearing (e.g., gear section 74 and the first intermediary gear 76) is disposed forward of the drive gear 52 can permit the respective accessory device mount 56 to be shifted forward, and thereby provide additional room for larger sized accessory devices; e.g., a larger frame E-motor.

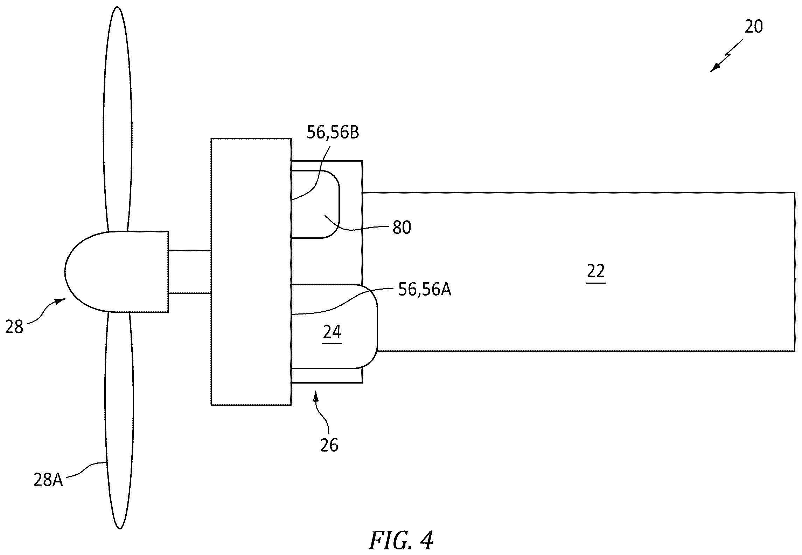

FIGS. 3A and 4 diagrammatically illustrate an E-motor 24 mounted to the first gearbox accessory mount 56A and an electric generator 80 mounted to the second gearbox accessory mount 56B. In this configuration, the E-motor 24 is in geared communication with the drive gear 52. In other words, rotational drive to or from the E-motor 24 does not pass through either layshaft assembly 48, 50 as it travels between the E-motor 24 and the drive gear 52.

In a first mode of operation for the present invention HEP system 20 (which may be referred to as "unassisted operation"), the gas turbine engine 22 provides rotational drive to the input shaft 46 of the gearbox 26. The rotational drive from the gas turbine engine 22 may be produced by the power turbine 42. The input shaft 46 drives the first and second layshaft assemblies 48, 50 and the first and second layshaft assemblies 48, 50, in turn, drive the drive gear 52. The drive gear 52 is connected to and drives the gearbox output shaft 54. The E-motor 24, which is mounted to a gearbox accessory mount 56A, is not operated in the first mode of operation to produce rotational drive or to produce electrical energy.

In a second mode of operation for the present invention HEP system 20 (which may be referred to as "assisted operation"), the gas turbine engine 22 provides rotational drive to the input shaft 46 of the gearbox 26 in the manner described above. In this second mode of operation, the E-motor 24 is controlled to produce rotational drive that is applied to the drive gear 52, and through the drive gear 52 to the output shaft 54. In this second mode of operation, rotational drive from both the gas turbine engine 22 and the E-motor 24 are provided to the drive gear 52 and gearbox output shaft 54. The E-motor 24 may be controlled to provide rotational drive at various flight segments.

In a third mode of operation for the present invention HEP system 20, the gas turbine engine 22 provides rotational drive to the input shaft 46 of the gearbox 26 in the manner described above. In this third mode of operation, the E-motor 24 is driven by the gearbox 26 and controlled to produce electrical energy. The electrical energy may be provided to other systems within the aircraft, including an electrical energy storage device (e.g., a battery) for storage therein. In this third mode of operation, rotational drive from the gas turbine engine 22 is provided to the gearbox output shaft 54. The E-motor 24 may be controlled to produce electrical energy (e.g., operate as an electrical generator) at various flight segments.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this invention by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present invention is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the inventions may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the inventions--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present invention are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. A hybrid-electric propulsion (HEP) system (20) for powering an aircraft, the HEP system (20) comprising:
a gearbox (26) that includes an input shaft (46), an output shaft (54), a drive gear (52), a first layshaft assembly (48), a second layshaft assembly (50), and a first gearbox accessory mount (56A);
a gas turbine engine (22) in drive communication with the input shaft (46) of the gearbox (26); and
an electric motor (24) engaged with the first gearbox accessory mount (56A),
wherein the first layshaft, FL, assembly (48) includes a first layshaft (68), a first FL gear (64), and a second FL gear (66), wherein the first FL gear (64) and the second FL gear (66) are attached to the first layshaft (68), and the first FL gear (64) is engaged with the input shaft (46) and the second FL gear (66) is engaged with the drive gear (52),
wherein the first gearbox accessory mount (56A) is in geared communication with the drive gear (52) independent of the first layshaft assembly (48).

2. The HEP system (20) of claim 1, wherein the HEP system (20) is configured to:
operate in a first mode of operation in which the gas turbine engine (22) is controlled to provide rotational drive to the input shaft (46) of the gearbox (26) and the electric motor (24) is controlled to not operate; and/or
operate in a second mode of operation in which the gas turbine engine (22) is controlled to provide a first rotational drive to the input shaft (46) of the gearbox (26) and the electric motor (24) is controlled to provide a second rotational drive to the drive gear (52) of the gearbox (26).

3. The HEP system (20) of claim 1, wherein the HEP system (20) is configured to:
operate in a first mode of operation, or a second mode of operation, or a third mode of operation one at a time,
wherein in the first mode of operation, the gas turbine engine (22) is controlled to provide rotational drive to the input shaft (46) of the gearbox (26) and the electric motor (24) is controlled to not operate,
wherein in the second mode of operation, the gas turbine engine (22) is controlled to provide a first rotational drive to the input shaft (46) of the gearbox (26) and the electric motor (24) is controlled to provide a second rotational drive to the drive gear (52) of the gearbox (26),
wherein in the third mode of operation, the gas turbine engine (22) is controlled to provide rotational drive to the input shaft (46) of the gearbox (26) and the electric motor (24) is controlled to produce electrical energy.

4. The HEP system (20) of claim 3, wherein in the third mode of operation the electric motor (24) is driven by the gearbox (26).

5. The HEP system (20) of any preceding claim, wherein the gearbox (26) is configured as a reduction gearbox.

6. The HEP system (20) of any preceding claim, wherein the second layshaft, SL, assembly (50) includes a second layshaft (68), a first SL gear (64), and a second SL gear (66), wherein the first SL gear (64) and the second SL gear (66) are attached to the second layshaft (68), and the first SL gear (64) is engaged with the input shaft (46) and the second SL gear (66) is engaged with the drive gear (52).

7. A hybrid-electric propulsion, HEP, system (20) for powering an aircraft, the HEP system (20) comprising:
a gearbox (26) that includes an input shaft (46), an output shaft (54), a drive gear (52), a first layshaft assembly (48), and a first gearbox accessory mount (56A);
a gas turbine engine (22) in drive communication with the input shaft (46) of the gearbox (26);
an electric motor (24) engaged with the first gearbox accessory mount (56A); and
a controller (44),
wherein the first layshaft, FL, assembly (48) includes a first layshaft (68), a first FL gear (64), and a second FL gear (66), wherein the first FL gear (64) and the second FL gear (66) are attached to the first layshaft (68), and the first FL gear (64) is engaged with the input shaft (46) and the second FL gear (66) is engaged with the drive gear (52), wherein the first gearbox accessory mount (56A) is in geared communication with the drive gear (52) independent of the first layshaft assembly (48),
wherein the HEP system (20) is configured to operate in a first mode of operation, a second mode of operation, or a third mode of operation, one at a time, wherein:
the first mode of operation includes controlling the gas turbine engine (22) to provide rotational drive to the input shaft (46) of the gearbox (26), and controlling the electric motor (24) to not operate;
the second mode of operation includes controlling the gas turbine engine (22) to provide a first rotational drive to the input shaft (46) of the gearbox (26) and controlling the electric motor (24) to provide a second rotational drive to the drive gear (52) of the gearbox (26); and
the third mode of operation includes controlling the gas turbine engine (22) to provide rotational drive to the input shaft (46) of the gearbox (26) and controlling the electric motor (24) to produce electrical energy,
wherein the controller (44) is in communication with the electric motor (24) and a non-transitory memory storing instructions, wherein the instructions when executed cause the controller (44) to selectively operate the HEP system (20) in one of the first mode of operation, the second mode of operation, or the third mode of operation, and to subsequently operate the HEP system (20) in another of the first mode of operation, the second mode of operation, or the third mode of operation.

8. The HEP system of claim 7, wherein in the third mode of operation the electric motor is driven by the gearbox.

9. The HEP system (20) of claim 7 or 8, further comprising a second layshaft, SL, assembly (50) that includes a second layshaft (68), a first SL gear (64), and a second SL gear (66), wherein the first SL gear (64) and the second SL gear (66) are attached to the second layshaft (68), and the first SL gear (64) is engaged with the input shaft (46) and the second SL gear (66) is engaged with the drive gear (52).

10. The HEP system (20) of any of claims 1 to 6 or 9, wherein the first layshaft assembly (48) and the second layshaft assembly (50) are parallel.

11. The HEP system (20) of any preceding claim, wherein the geared communication between the first gearbox accessory mount (56A) and the drive gear (52) is a reduction configuration.

12. The HEP system (20) of any preceding claim, further comprising a propulsion unit (28) in communication with the output shaft (54), wherein, optionally, the propulsion unit (28) includes a propeller (28A).

13. A gearbox (26) for a hybrid-electric propulsion, HEP, system (20) for an aircraft, the gearbox (26) comprising:
an input shaft (46);
an output shaft (54);
a drive gear (52);
a first layshaft, FL, assembly (48) that includes a first layshaft (68), a first FL gear (64), and a second FL gear (66), wherein the first FL gear (64) and the second FL gear (66) are attached to the first layshaft (68), the first FL gear (64) is engaged with the input shaft (46), and the second FL gear (66) is engaged with the drive gear (52);
a second layshaft, SL, assembly (50) that includes a second layshaft (68), a first SL gear (64), and a second SL gear (66), wherein the first SL gear (64) and the second SL gear (66) are attached to the second layshaft (68), and the first SL gear (64) is engaged with the input shaft (46) and the second SL gear (66) is engaged with the drive gear (52); and
a first gearbox accessory mount (56A) that is in geared communication with the drive gear (52) independent of the first layshaft assembly (48), wherein the first gearbox accessory mount (56A) is configured to engage an electric motor (24) of the HEP system (20) for transferring rotational drive from the electric motor (24) to the drive gear (52).

14. The gearbox (26) of claim 13, wherein:
the gearbox (26) is configured as a reduction gearbox (26); and/or
the geared communication between the first gearbox accessory mount (56A) and the drive gear (52) is a reduction configuration

15. The gearbox (26) of claim 13 or 14, wherein the first layshaft assembly (48) and the second layshaft assembly (50) are parallel.
